# EUROPEAN PATENT SPECIFICATION

(11) **EP 2 174 461 B1**
(45) Date of publication and mention of the grant of the patent: **24.11.2010**
(21) Application number: 07787833.8
(22) Date of filing: 23.07.2007
(51) Int. Cl.: H04L 29/06, H04L 29/14

(54) **METHOD AND APPARATUS FOR USE IN A COMMUNICATIONS NETWORK**
VERFAHREN UND VORRICHTUNG ZUR VERWENDUNG IN EINEM KOMMUNIKATIONSNETZ
PROCÉDÉ ET APPAREIL À USAGE DANS UN RÉSEAU DE COMMUNICATIONS

(43) Date of publication of application: 14.04.2010
(73) Proprietor: Telefonaktiebolaget LM Ericsson (publ), 164 83 Stockholm (SE)
(72) Inventor: BELINCHÓN VERGARA, Maria Carmen, E-28902 Getafe (madrid) (ES); FERNANDEZ GALMES, Juan Manuel, 28903 Getafe Madrid (ES); MUÑOZ MUÑOZ, Santiago, E-28018 Madrid (ES)
(74) Representative: Brewer, Michael Robert
(86) International application number: PCT/EP2007/057590
(87) International publication number: WO 2009/012814

(56) References cited:
- WO-A-2005/039108
- WO-A-2006/016839

## Description

### Technical field

The present invention relates to a method and apparatus for use in a communications network, for example a Universal Mobile Telecommunications System having an IP Multimedia Subsystem.

### Background

IP Multimedia services provide a dynamic combination of voice, video, messaging, data, etc. within the same session. By growing the number of basic applications and the media that it is possible to combine, the number of services offered to the end users will grow, and the inter-personal communication experience will be enriched. This will lead to a new generation of personalised, rich multimedia communication services, including so-called "combinational IP Multimedia" services.

The UMTS (Universal Mobile Telecommunications System) is a third generation wireless system designed to provide higher data rates and enhanced services to subscribers. UMTS is a successor to the Global System for Mobile Communications (GSM), with an important evolutionary step between GSM and UMTS being the General Packet Radio Service (GPRS). GPRS introduces packet switching into the GSM core network and allows direct access to packet data networks (PDNs). This enables high-data rate packets switch transmissions well beyond the 64 kbps limit of ISDN through the GSM call network, which is a necessity for UMTS data transmission rates of up to 2 Mbps. UMTS is standardised by the 3^{rd} Generation Partnership Project (3GPP) which is a conglomeration of regional standards bodies such as the European Telecommunication Standards Institute (ETSI), the Association of Radio Industry Businesses (ARIB) and others. See 3GPP TS 23.002 for more details.

The UMTS architecture includes a subsystem known as the IP Multimedia Subsystem (IMS) for supporting traditional telephony as well as new IP multimedia services (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS is able to connect to both PSTN/ISDN (Public Switched Telephone Network/Integrated Services Digital Network) as well as the Internet.

The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. The 3GPP has chosen SIP for signalling between a User Equipment (UE) and the IMS as well as between the components within the IMS.

Specific details of the operation of the UMTS communications network and of the various components within such a network can be found from the Technical Specifications for UMTS that are available from http://www.3gpp.org. Further details of the use of SIP within UMTS can be found from the 3GPP Technical Specification TS 24.228 V5.8.0 (2004-03).

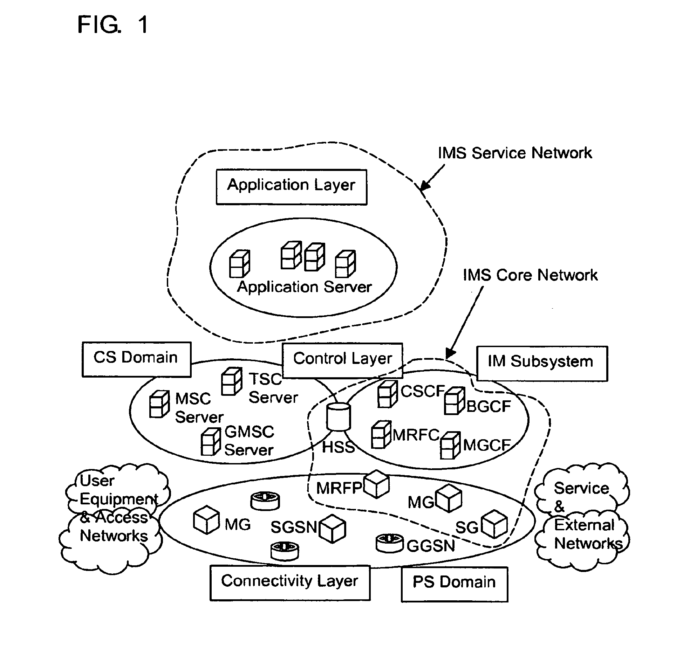

Figure 1 of the accompanying drawings illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

A user registers with the IMS using the specified SIP REGISTER method. This is a mechanism for attaching to the IMS and announcing to the IMS the address at which a SIP user identity can be reached. In 3GPP, when a SIP terminal performs a registration, the IMS authenticates the user, and allocates a S-CSCF to that user from the set of available S-CSCFs. Whilst the criteria for allocating S-CSCFs is not specified by 3GPP, these may include load sharing and service requirements. It is noted that the allocation of an S-CSCF is key to controlling (and charging for) user access to IMS-based services. Operators may provide a mechanism for preventing direct user-to-user SIP sessions which would otherwise bypass the S-CSCF.

During the registration process, it is the responsibility of the I-CSCF to select an S-CSCF if a S-CSCF is not already selected. The I-CSCF receives the required S-CSCF capabilities from the home network's Home Subscriber Server (HSS), and selects an appropriate S-CSCF based on the received capabilities. (It is noted that S-CSCF allocation is also carried out for a user by the I-CSCF in the case where the user is called by another party, and the user is not currently allocated an S-CSCF.) When a registered user subsequently sends a session request to the IMS, the P-CSCF is able to forward the request to the selected S-CSCF based on information received from the S-CSCF during the registration process.

Within the IMS service network, Application Servers (ASs) are provided for implementing IMS service functionality. Application Servers provide services to end-users in an IMS system, and may be connected either as end-points over the 3GPP defined Mr interface, or "linked in" by an S-CSCF over the 3GPP defined ISC interface. In the latter case, Initial Filter Criteria (IFC) are used by an S-CSCF to determine which Applications Servers should be "linked in" during a SIP Session establishment. Different IFCs may be applied to different call cases. The IFCs are received by the S-CSCF from an HSS during the IMS registration procedure as part of a user's User Profile. Certain Application Servers will perform actions dependent upon subscriber identities (either the called or calling subscriber, whichever is "owned" by the network controlling the Application Server). For example, in the case of call forwarding, the appropriate (terminating) application server will determine the new terminating party to which a call to a given subscriber will be forwarded. In the case that an IFC indicates that a SIP message received at the S-CSCF should be forwarded to a particular SIP AS, that AS is added into the message path. Once the SIP message is remitted by the AS to the S-CSCF, it is forwarded on towards its final destination, or forwarded to another AS if this is indicated in the IFCs.

As appreciated by the applicant, the IMS does not specify any procedure by which an IMS node advertises the adjacent nodes (or far end nodes) about a temporary unavailability due to, for example, a restart, local maintenance operations such as software (SW) upgrades, and so on, and the later recovery.

Patent document WO 2005/039108 discloses an IMS system in which, when en I-CSCF Fails to receive a response From a S-CSCF assigned to a user it starts the process for selecting and assigning a different S-CSCF for the user.

The lack of such a procedure can cause some interference in the usual function of the applications involved.

It is desirable to address the above-identified issue.

The following is a list of some of the previously-considered procedures for recovery situations:
- GSM Restoration procedures: In this specification it is described the methods by means of which nodes like HLR, VLR, SGSN, GGSN restore user data after their loss of corruption. See "3rd Generation Partnership Project; Technical Specification Group Core Network; Restoration procedures (Release 6)" (3GPP TS 23.007 V6.1.0).
- Radius Charging ON-OFF: When a Radius Charging client recovers from an unavailability situation, it advertises the charging server about the event so that the charging server closes all sessions related with the affected client (i.e. those charging sessions opened for users which use the affected client). See RFC 2865 "Remote Authentication Dial In User Service (RADIUS)".
- MTP 3 Restart: once the MTP 3 layer recovers from a restart (unavailability), it begins an advertising procedure toward the adjacent nodes, so that they can reconfigure their routing tables accordingly and notifies their respective users about the event for taking the proper actions. See "Specifications of Signalling System No. 7 - Message transfer part; Signalling network functions and messages", ITU-T Recommendation Q.704.
- SCCP Restart: similar to the MTP 3 Restart but at SCCP level and advertising only the concerned subsystems.
- M3UA Restart: Equivalent to the MTP 3 Restart but for SIGTRAN.
- Diameter peer restart: This is detected with the DWR/DWA messages specified in IETF RFC 3588.
- Diameter application restart: This is indicated with the Origin-State-Id AVP specified in IETF RFC 3588.

### Summary

According to a first aspect of the present invention, there is provided a method according to claim 1 for use by an Interrogating Call/Session Control Function, I-CSCF, of an IP Multimedia Subsystem, IMS, comprising: in response to receipt of a Session Initiation Protocol, SIP, message, requesting capabilities information relating to a user from a Home Subscriber Server, HSS, of the IMS; and, on receipt of the capabilities information from the HSS, selecting a primary and a secondary Serving Call/Session Control Function, S-CSCF, of the IMS to provide services to the user.

The method may comprise attempting to forward the SIP message to the primary S-CSCF with information relating to the secondary S-CSCF, such that the information can be provided subsequently to the HSS.

The method may comprise, if the attempt is determined to have failed, forwarding the SIP message to the secondary S-CSCF instead.

The SIP message may relate to a non-registered user.

The SIP message may comprise a SIP Register message.

According to a second aspect of the present invention, there is provided a method according to claim 4 for use by an Interrogating Call/Session Control Function, I-CSCF, of an IP Multimedia Subsystem, IMS, comprising: in response to receipt of a Session Initiation Protocol, SIP, message, requesting information from a Home Subscriber Server, HSS, of the IMS relating to a Serving Call/Session Control Function, S-CSCF, of the IMS assigned to provide services to a user; and receiving information from the HSS relating to a primary and a secondary S-CSCF assigned to the user.

The method may comprise attempting to forward the SIP message to the primary S-CSCF; and if the attempt is determined to have failed, forwarding the SIP message to the secondary S-CSCF instead.

The method may comprise determining that the attempt has failed if a reply is not received from the primary S-CSCF within a predetermined time period.

The SIP message may relate to a registered user.

The SIP message may comprise a SIP Register message or a SIP Invite message.

According to a third aspect of the present invention, there is provided a method according to claim 7 for use by a Serving Call/Session Control Function, S-CSCF, of an IP Multimedia Subsystem, IMS, comprising: in response to receipt of a Session Initiation Protocol, SIP, message from an Interrogating Call/Session Control Function, I-CSCF, of the IMS comprising information relating to a primary and a secondary Serving Call/Session Control Function, S-CSCF, of the IMS, forwarding the information relating to the secondary Serving Call/Session Control Function to a Home Subscriber Server, HSS, of the IMS.

The method may comprise forwarding the information to the HSS in a Diameter message.

The Diameter message may be a Server-Assignment-Request message.

According to a fourth aspect of the present invention, there is provided a method according to claim 9 for use by a Serving Call/Session Control Function, S-CSCF, of an IP Multimedia Subsystem, IMS, comprising: in response to a restart, clearing user-related data in the knowledge that secondary S-CSCFs have been assigned respectively to the users concerned.

According to a fifth aspect of the present invention, there is provided a method according to claim 10 for use by a Home Subscriber Server, HSS, of an IP Multimedia Subsystem, IMS, comprising: receiving from an Interrogating Call/Session Control Function, I-CSCF, of the IMS a request for information relating to a Serving Call/Session Control Function, S-CSCF, of the IMS assigned to provide services to a user, and in response sending information relating to a primary and a secondary S-CSCF.

The request may be a re-registration or de-registration request.

According to a sixth aspect of the present invention, there is provided a method according to claim 12 for use by a Home Subscriber Server, HSS, of an IP Multimedia Subsystem, IMS, comprising: receiving a message from a Serving Call/Session Control Function, S-CSCF, of the IMS including information relating to a primary and a secondary Serving Call/Session Control Function, S-CSCF, of the IMS, and in response storing the information relating to the primary and the secondary S-CSCF.

According to a seventh aspect of the present invention, there is provided a method according to claim 13 for use in an IP Multimedia Subsystem, IMS, comprising associating at least a primary and a secondary Serving Call/Session Control Function, S-CSCF, of the IMS with a user, with responsibility for providing services to the user residing at least initially with the primary S-CSSF, thereby enabling the responsibility to be switched from the primary S-CSCF to the secondary S-CSCF should the primary S-CSCF become unavailable.

Associating may comprise making use of such an association.

Where a message is stated as being sent from a user or sent to a particular node, for example, it is to be understood that this is intended as including the case where the message is not sent directly from the user or to the particular node, but via other nodes as well.

According to an eighth aspect of the present invention, there is provided apparatus according to claim 15 for use in an IP Multimedia Subsystem, the apparatus comprising means for performing a method according to any of the first to seventh aspects of the present invention.

According to a ninth aspect of the present invention, there is provided a program according to claim 16 for controlling an apparatus to perform a method according to any of the first to seventh aspects of the present invention.

According to a tenth aspect of the present invention there is provided a program which, when loaded into an apparatus, causes the apparatus to become an apparatus according to the eighth aspect of the present invention.

The program may be carried on a carrier medium.

The carrier medium may be a storage medium.

The carrier medium may be a transmission medium.

According to an eleventh aspect of the present invention, there is provided an apparatus programmed by a program according to the ninth or tenth aspect of the present invention.

According to a twelfth aspect of the present invention, there is provided a storage medium according to claim 17 containing a program according to the ninth or tenth aspect of the present invention.

Further embodiments are defined in the dependent claims.

### Brief description of the drawings

Figure 1, discussed hereinbefore, illustrates schematically the integration of an IP Multimedia Subsystem into a 3G mobile communications system;
Figure 2 is a block diagram illustrating the Data Model example used as a basis for the use cases described herein;
Figure 3 illustrates failure of mobile terminating call when S-CSCF1 is restarting;
Figure 4 illustrates failure at reception of protected REGISTER when S-CSCF1 is restarting;
Figure 5 illustrates an Initial Registration procedure;
Figure 6 illustrates a Recovery Procedure at terminating call;
Figure 7 illustrates a Recovery procedure at re-registration or deregistration;
Figure 8 illustrates schematically some steps performed by an I-CSCF in an embodiment of the present invention;
Figure 9 illustrates schematically some steps performed by a S-CSCF in an embodiment of the present invention;
Figure 10 illustrates schematically some steps performed by a HSS in an embodiment of the present invention; and
Figure 11 provides a table that defines the mapping between stage 2 operations and stage 3 flows using the DIAMETER protocol.

### Detailed description

Because of the lack of specified procedures in the current IMS standard as mentioned above, failure of an S-CSCF may result in incorrect processing of sessions, or not processing the sessions at all.

Before a description embodiments of the present invention, two use cases will be described so explain the context in which embodiment of the present invention will operate. In these use cases, a S-CSCF is assumed to experience a persistent failure of some sort.

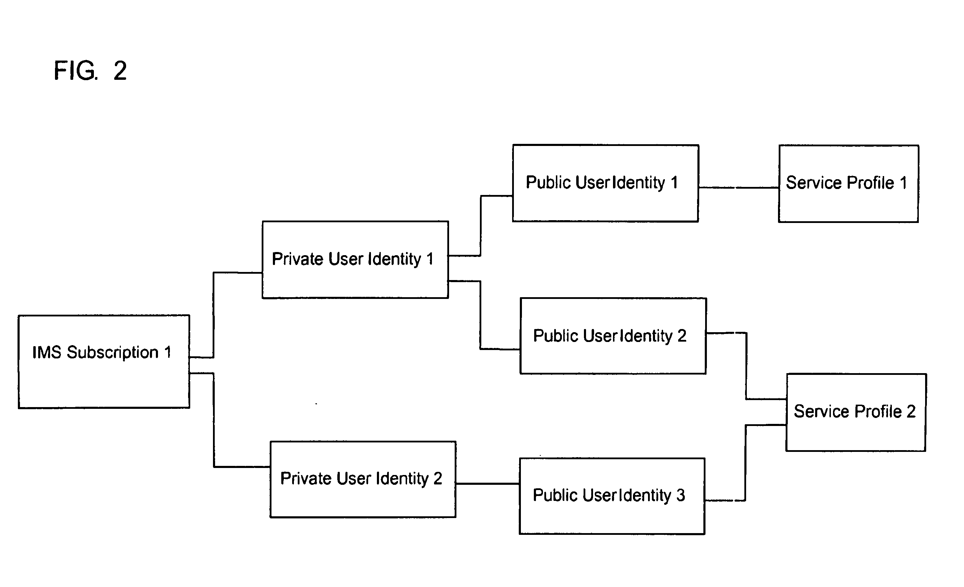

For simplicity, the Data Model example depicted in Figure 2 will be taken as a base. It is assumed that there is an S-CSCF1 assigned to an IMS Subscription, i.e.:
- either the IMPI1 (IP Multimedia Private User Identity) is already registered/unregistered with another IMPU (IP Multimedia Public User Identity), or
- the IMPU1 was unregistered, or
- any other IMPI within the IMS Subscription is registered or unregistered

### Use Case 1: Mobile terminating session when S-CSCF has a persistent failure

When the I-CSCF of the terminating network receives a SIP message to initiate a call, the I-CSCF sends a Cx-Location-Query to the HSS, and the HSS should return the already-assigned S-CSCF name, S-CSCF1, to be accessed by the I-CSCF, so that the terminating session establishment is properly treated and therefore reaches the destination UE.

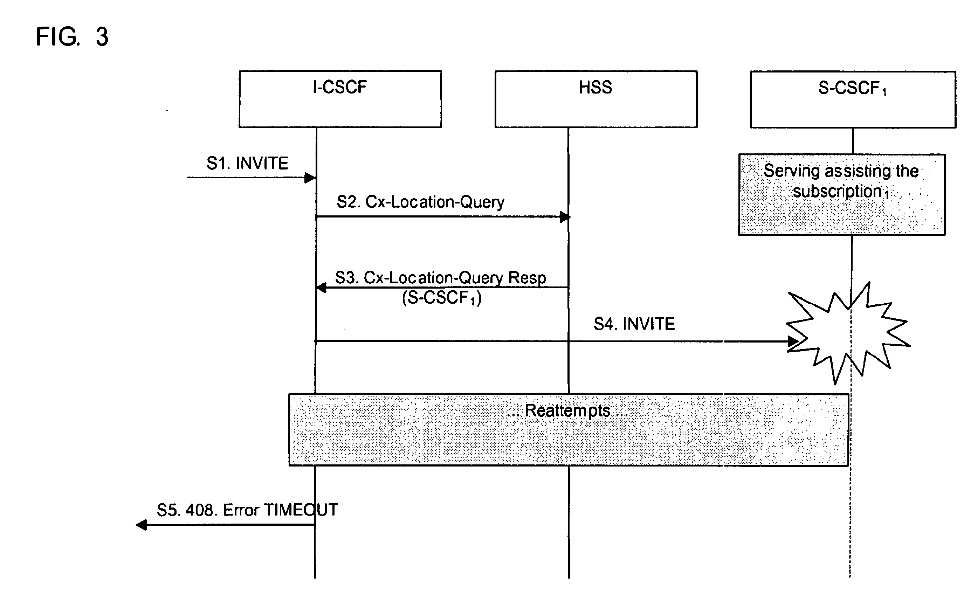

However, while the S-CSCF1 is down, it will not be reached, and after several attempts the I-CSCF will reject the call, stating that it was not able to forward the SIP message in a predetermined time. In this case, the flow might be as shown in Figure 3, the steps of which are summarised below:

| | |
|---|---|
| S1 | A terminating SIP INVITE is received at the I-CSCF |
| S2 | The I-CSCF asks for the S-CSCF serving the user |
| S3 | The HSS sends back the S-CSCF1 |
| S4 | The I-CSCF forwards the SIP INVITE to the selected S-CSCF1. |
| S5 | After a number of retries, I-CSCF returns an error stating the originating call attempt failed due to it was not able to forward the message in a time. |

In this case, no terminating call will progress to this user until the S-CSCF1 is restarted or the user is registered again in another S-CSCF.

### Use Case 2: Re-Registration when S-CSCF has a persistent failure

When the I-CSCF receives a protected SIP REGISTER message (Authorization header with integrity protected parameter set to "yes"), the I-CSCF sends a Cx-Query message to the HSS, and the HSS should return the already-assigned S-CSCF name, S-CSCF1, to be accessed by the I-CSCF.

However, while the S-CSCF1 is down, it will not be reached and after several reattempts the I-CSCF will reject the re-registration with a 504 Server Time-Out message.

Note that this situation will happen until the user is initially registered (an unprotected SIP REGISTER message is sent), and in this case the I-CSCF will request the capabilities again.

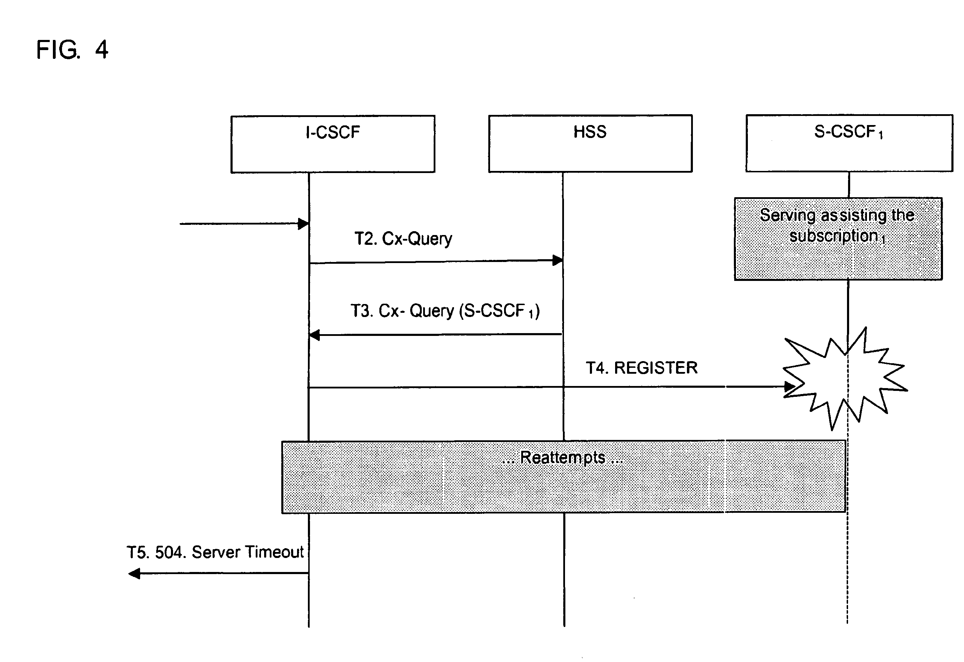

The following steps are illustrated in Figure 4:

| | |
|---|---|
| T1 | A SIP REGISTER message with Authorization header with integrity protected parameter set to "yes" is received at the I-CSCF |
| T2 | The I-CSCF asks for the S-CSCF serving the user by sending a Cx-Query message |
| T3 | The HSS sends back the S-CSCF1 |
| T4 | The I-CSCF forwards the protected SIP REGISTER to the selected S-CSCF1. |
| T5 | After a number of retries, I-CSCF returns an error stating the originating call attempt failed due to it was not able to forward the message in a time (504 Server Timeout) |

With the above scenarios in mind, the basic idea underlying an embodiment of the present invention is to allow S-CSCF handover to an already-selected S-CSCF (S-CSCF2) whenever there is a persistent failure in a S-CSCF by:
- Allowing reallocation in the other S-CSCF (S-CSCF2) in terminating calls
- Allowing reallocation in the other S-CSCF (S-CSCF2) when a re-registration or de-registration procedure is being executed.
- Allowing the HSS to accept queries from two selected S-CSCFs (S-CSCF1 and S-CSCF2)

For this to happen, the I-CSCF might select a pair of S-CSCFs at initial registration that are stored in the HSS.

When the primary selected S-CSCF (S-CSF1) fails, the 1-CSCF will select the secondary S-CSCF (S-CSCF2), and the HSS shall accept queries from this S-CSCF (S-CSCF2).

This actions performed in an embodiment of the present invention by the I-CSCF, S-CSCF and HSS will now be described in more detail.

### Procedures in the I-CSCF

### 1 Actions at reception of a registration request

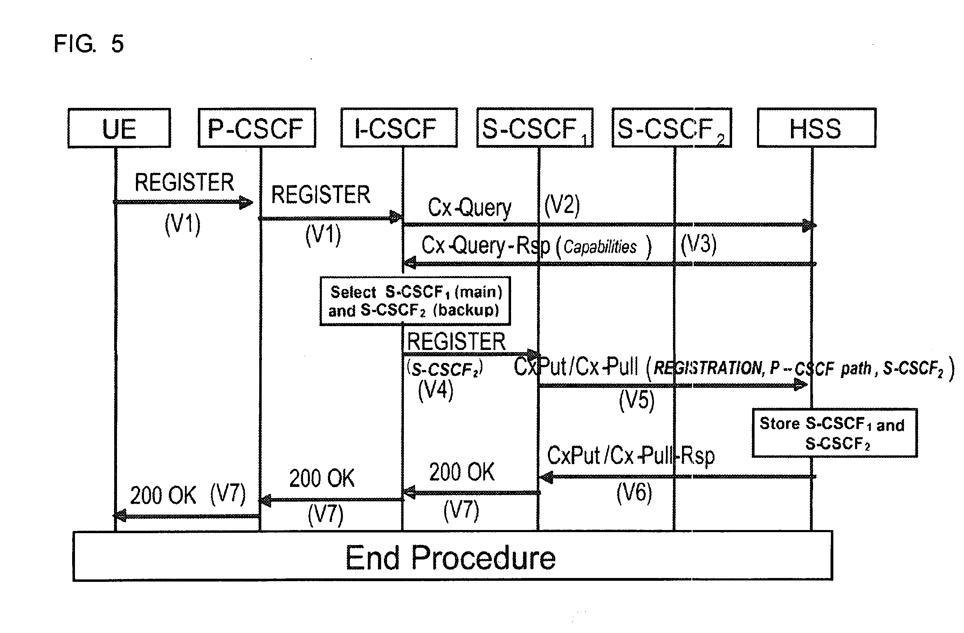

With reference to Figure 5, in a normal 3GPP Procedure, when an initial registration is requested (V1, V2), the HSS would send (V3) the capabilities to the I-CSCF in order that the I-CSCF can select a specific S-CSCF. In an embodiment of the present invention, the I-CSCF instead selects a primary S-CSCF (S-CSCF1) and a secondary S-CSCF (S-CSCF2). The I-CSCF forwards (V4) the REGISTER message to S-CSCF1, and includes the S-CSCF2 name in the message since both names are to be stored in the HSS.

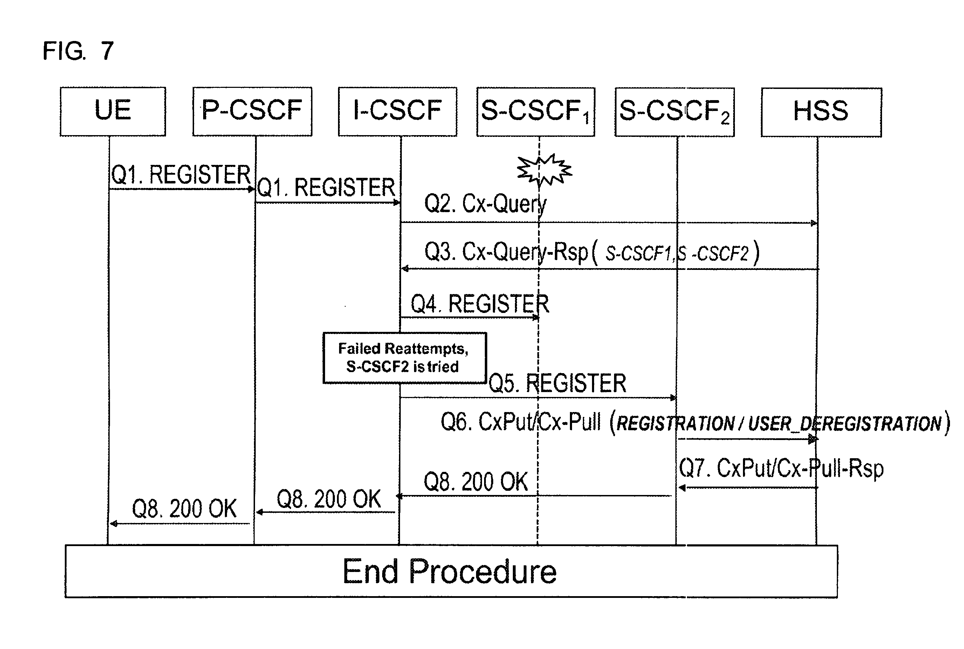

When a re-registration or deregistration is performed, the HSS would return both S-CSCF1 and S-CSCF2 in the Cx-Query/Cx-SelectPull to the I-CSCF, such that if one of them should not answer, then the other could be used. This is described in more detail below with reference to Figure 7.

### 2 Actions at reception of any other message

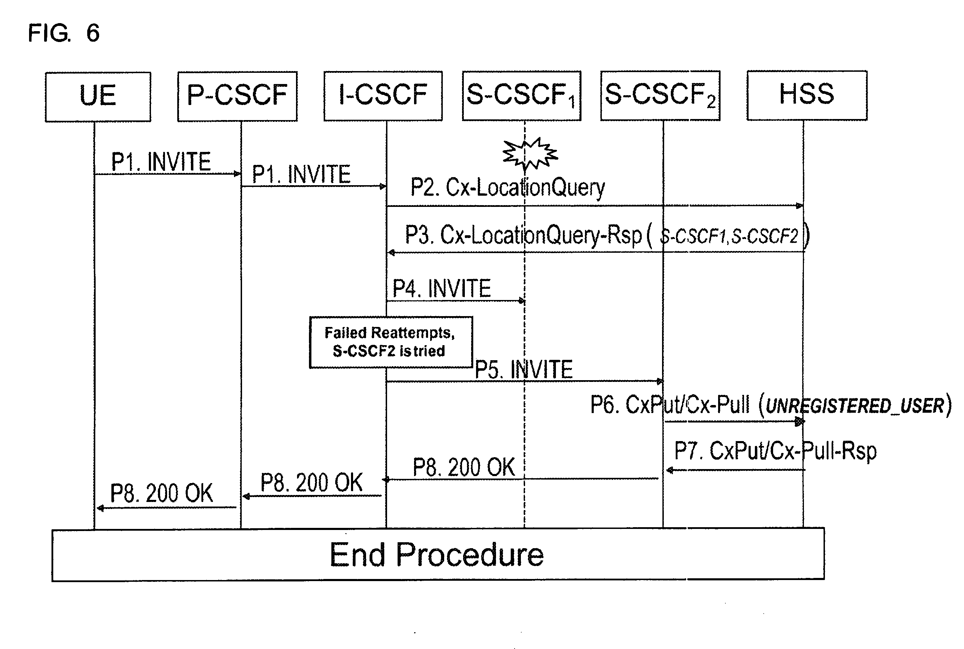

In a normal 3GPP Procedure, when a call is received for an already registered user, the I-CSCF would request from the HSS the server assigned to the user in a Cx-LocationQuery, with the HSS returning the allocated S-CSCF1. In an embodiment of the present invention, the HSS would return both S-CSCF1 and S-CSCF2. The I-CSCF then forwards the SIP message to S-CSCF1, and if it does not answer, S-CSCF2 will be used instead. This is described in more detail below with reference to Figure 6.

In a normal 3GPP Procedure, when a terminating call is received for a non-registered user, I-CSCF will request the capabilities to HSS in a Cx-LocationQuery in order to select a S-CSCF (in general, Cx-Location-Query (Diameter LIR) is sent by the I-CSCF to the HSS when it receives a SIP INVITE message, while Cx-Query (Diameter UAR) is sent by the I-CSCF to the HSS when it receives a SIP REGISTER message). In an embodiment of the present invention, the I-CSCF would select one primary S-CSCF (S-CSCF1) and one secondary S-CSCF (S-CSCF2) and will forward the SIP message to S-CSCF1 including S-CSCF2 since both node names are to be stored in the HSS.

### Procedures in the S-CSCF

### 1 Basic restart procedure at Primary S-CSCF

If the S-CSCF restarts after a failure it would perform the following general action for the user related data that have been affected by the S-CSCF fault: clear all user related data.

Since another S-CSCF (S-CSCF2) will have been allocated to serve the user in case the primary S-CSCF (S-CSCF1) fails, this S-CSCF (S-CSCF2) would not need to perform any further action.

### 2 Actions at reception of a secondary S-CSCF in any SIP message

The S-CSCF would be able to receive a secondary S-CSCF (S-CSCF2) as part of a SIP header in any SIP message.

If a server assignment is to be performed after the reception of the SIP message (Cx-Put/Cx-SelectPull), the S-CSCF2 is included as part of an AVP in the Diameter message to the HSS.

### Procedures in the HSS

### 1 Actions at reception of a Cx-Put/Cx-Pull

When a server assignment request is received at the HSS for a non-registered user trying to set its state as registered or unregistered, the HSS would be able to store two S-CSCF names, the primary one (S-CSCF1) and the secondary one (S-CSCF2).

When a server assignment request is received for a registered user trying to set its state as unregistered (due to a terminating call has been received in a S-CSCF with no data associated to this user), the HSS would accept said request from either S-CSCF1 or S-CSCF2, and store the sending S-CSCF as the one currently serving the registration of the user.. This is illustrated, for example, in Fig. 6, steps P6/P7.

### 2 Actions at reception of any Cx message

The HSS can admit any Cx message received from either S-CSCF1 or S-CSCF2..

At reception of any Cx message, the HSS checks that the S-CSCF which sent the message is either: the primary (S-CSCF1) or the secondary (S-CSCF2), so as to allow its further processing, and also in order to set this S-CSCF as the one being used and facilitate the sending of outgoing messages.

### 3 Actions when no Cx message answer is received

When the HSS sends any Cx outgoing message (e.g. Cx-Deregister or Cx-UpdateSubs) and no answer is received from S-CSCF1, the HSS can re-send the message to S-CSCF2.

### Recovery procedure at reception of Mobile terminating session when S-CSCF has a persistent failure

The sequence flow is illustrated in Figure 6 and summarised as follows:

| | |
|---|---|
| P1 | A SIP message different than REGISTER, in this case a SIP INVITE message, is sent to the I-CSCF |
| P2 | The I-CSCF asks for the S-CSCF serving the user by sending a Cx-LocationQuery message |
| P3 | The HSS sends back both S-SCF1 and S-CSCF2. |
| P4 | The I-CSCF forwards the SIP message to S-CSCF1. |
| P5 | After a number of retries without receiving any answer, I-CSCF tries with S-CSCF2. |
| P6 | The S-CSCF2 sends a server assignment request (Cx-Pull/Cx-SelectPull) trying to set it as the S-CSCF serving the unregistered user. |
| P7 | HSS accepts the server assignment request since it has been received by the secondary S-CSCF (S-CSCF2). Optionally the HSS can set the S-CSCF serving currently the user as the last one from which a message was received, this allows address the correct node (e.g. S-CSCF2) the next time a query (e.g. from I-CSCF) is received, or in case a message is to be sent from the HSS to the S-CSCF serving the user. |
| P8 | The SIP message is successfully answered back. |

### Recovery procedure at reception of Re-registration or Deregistration when S-CSCF has a persistent failure

The sequence flow is illustrated in Figure 7 and summarised as follows:

| | |
|---|---|
| Q1 | A SIP REGISTER message with Authorization header with integrity protected parameter set to "yes" is received at the I-CSCF |
| Q2 | The I-CSCF asks for the S-CSCF serving the user by sending a Cx-Query message |
| Q3 | The HSS sends back both S-SCF1 and S-CSCF2. |
| Q4 | The I-CSCF forwards the protected SIP REGISTER to S-CSCF1. |
| Q5 | After a number of retries without receiving any answer, I-CSCF tries with S-CSCF2. |
| Q6 | The S-CSCF2 sends a server assignment request (Cx-Pull/Cx-SelectPull) trying to set it as the S-CSCF serving the user. |
| Q7 | HSS accepts the server assignment request since it has been received by the secondary S-CSCF (S-CSCF2). Optionally it could set it as the last one from which a message was received, just in case a subsequent outgoing message is needed to be sent and hence select the correct node. |
| Q8 | The protected REGISTER is successfully answered back. |

### General

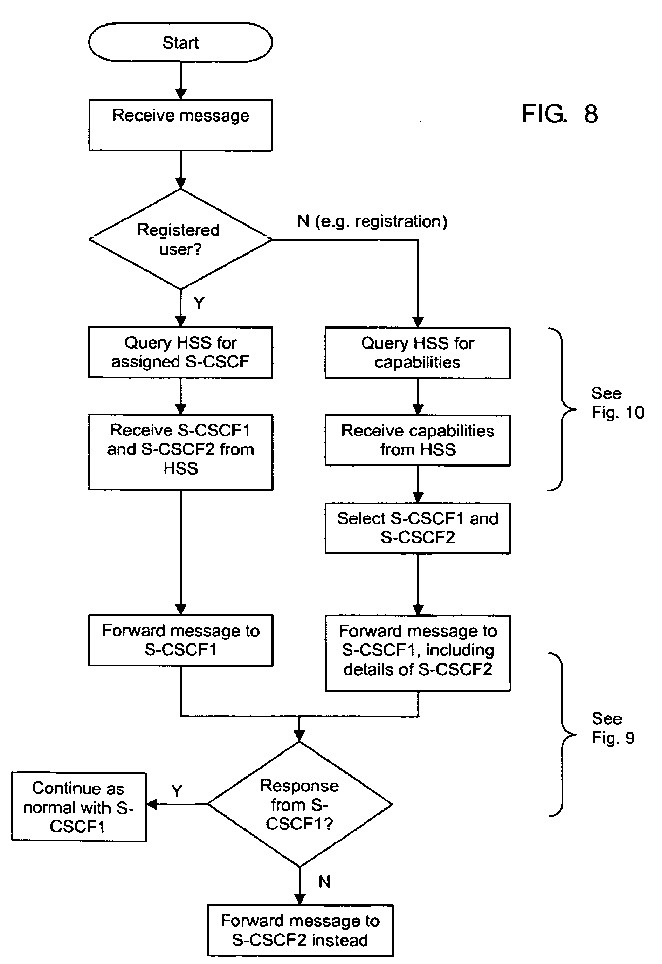

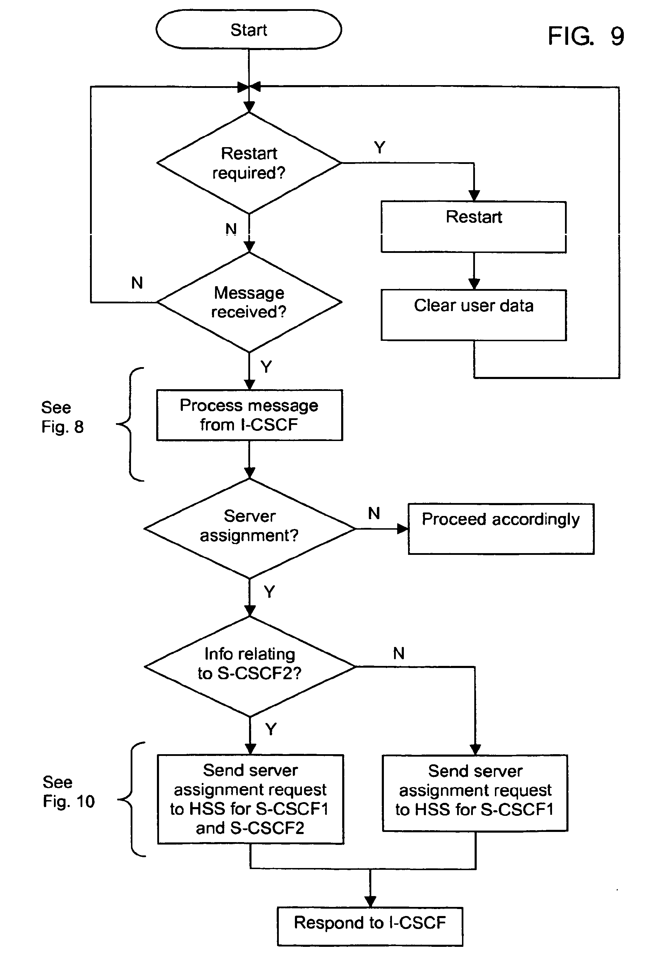

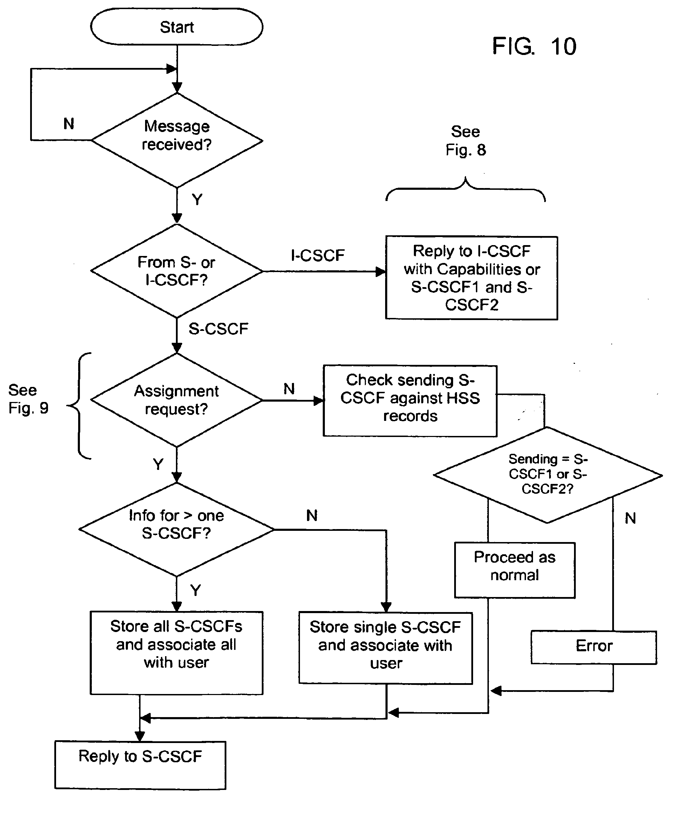

The above description can be summarised by illustrating in general terms in Figures 8 to 10 the steps that are performed by each of the nodes I-CSCF (Figure 8), S-CSCF1 (Figure 9) and HSS (Figure 10). It will be appreciated that the various elements illustrated in each of Figures 8 to 10 can also be considered to represent components of an apparatus having those respective functions, and each of Figures 8 to 10 is to be interpreted accordingly as also illustrating an apparatus.

In summary, the above-described procedures according to an embodiment of the present invention differ from known procedures in at least some of the following ways:
- Two S-CSCFs (primary and secondary) are selected for use in the I-CSCF.
- The URI of the secondary S-CSCF (S-CSCF2) included in any SIP message identifies a second S-CSCF which could also serve the user.
- The name of the secondary S-CSCF (S-CSCF2) included in the Cx-Put message identifies a second S-CSCF which could also serve the user.
- The inclusion of both S-CSCF names (S-CSCF1 and S-CSCF2) in the Cx-LocationQuery or Cx-Query answer.
- The use of the secondary S-CSCF (S-CSCF2) when, after a number of attempts, the I-CSCF does not receive any answer from the primary S-CSCF (S-CSCF1).
- Storage of primary S-CSCF1 and secondary S-CSCF2 in the HSS.
- The HSS allows the reception of Cx messages from both selected S-CSCFs.

A system, method and apparatus according to an embodiment of the present invention allows hand-over to a new S-CSCF when the previously-assigned one has failed.

This is achieved by allowing the I-CSCF to select a pair of S-CSCFs at initial registration. The information about the selected primary S-CSCF, and about the "spare" S-CSCF, is stored in the HSS, which causes both names to be sent from the HSS to an I-CSCF in any subsequent query response. Then, in the event the I-CSCF detects a faulty condition of the primary S-CSCF (at re-registration, de-registration or incoming call), it forwards the concerned message (i.e. REGISTER or INVITE) to the spare S-CSCF.

An embodiment of the present invention has one or more of the following advantages:
- The user docs not experience any service outage
- Terminating calls are handled by the correct pair of S-CSCFs and are routed to the user.
- The network repairs itself from abnormalities.
- There is no need for a new registration procedure from the user equipment.

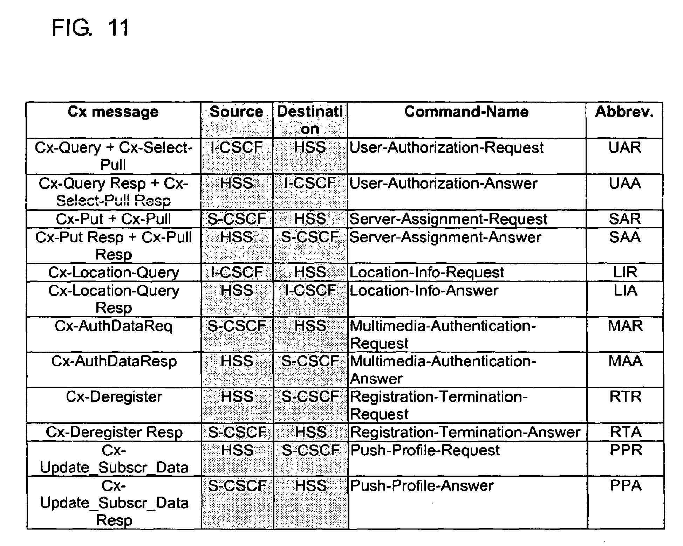

Figure 11 provides a table that defines the mapping between: stage 2 operations (illustrated in the drawings described above), and stage-3 flows (using the DIAMETER protocol to implement the stage 2 operations). The table has been reproduced from 3GPP spec TS 29.228 V7.3.0 (Sep-2006).

It will be appreciated that operation of one or more of the above-described components can be controlled by a program operating on the device or apparatus. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

It will also be appreciated by the person of skill in the art that various modifications may be made to the above-described embodiments without departing from the scope of the present invention as defined by the appended claims. In particular, it will be appreciated that, although described in relation to a Universal Mobile Telecommunications System having an IP Multimedia Subsystem, the present invention is also applicable to other types of network.

## Claims

1. A method for use by an Interrogating Call/Session Control Function, I-CSCF, of an IP Multimedia Subsystem, IMS, comprising:
in response to receipt of a Session Initiation Protocol, SIP, message, requesting capabilities information relating to a user from a Home Subscriber Server, HSS, of the IMS; and
on receipt of the capabilities information from the HSS, selecting a primary and a secondary Serving Call/Session Control Function, S-CSCF, of the IMS to provide services to the user.

2. A method as claimed in claim 1, comprising attempting to forward the SIP message to the primary S-CSCF with information relating to the secondary S-CSCF, such that the information can be provided subsequently to the HSS, and optionally comprising, if the attempt is determined to have failed, forwarding the SIP message to the secondary S-CSCF instead.

3. A method as claimed in claim 1 or 2, wherein the SIP message relates to a non-registered user and/or comprises a SIP Register message.

4. A method for use by an Interrogating Call/Session Control Function, I-CSCF, of an IP Multimedia Subsystem, IMS, comprising:
in response to receipt of a Session Initiation Protocol, SIP, message, requesting information from a Home Subscriber Server, HSS, of the IMS relating to a Serving Call/Session Control Function, S-CSCF, of the IMS assigned to provide services to a user; and
receiving information from the HSS relating to a primary and a secondary S-CSCF assigned to the user.

5. A method as claimed in claim 4, comprising attempting to forward the SIP message to the primary S-CSCF; and if the attempt is determined to have failed, for example if a reply is not received from the primary S-CSCF within a predetermined time period, forwarding the SIP message to the secondary S-CSCF instead.

6. A method as claimed in claim 4 or 5, wherein the SIP message relates to a registered user and/or comprises a SIP Register message or a SIP Invite message.

7. A method for use by a Serving Call/Session Control Function, S-CSCF, of an IP Multimedia Subsystem, IMS, comprising: in response to receipt of a Session Initiation Protocol, SIP, message from an Interrogating Call/Session Control Function, I-CSCF, of the IMS comprising information relating to a primary and a secondary Serving Call/Session Control Function, S-CSCF, of the IMS, forwarding the information relating to the secondary Serving Call/Session Control Function to a Home Subscriber Server, HSS, of the IMS.

8. A method as claimed in claim 7, comprising forwarding the information to the HSS in a Diameter message, such as a Server-Assignment-Request message.

9. A method for use by a Serving Call/Session Control Function, S-CSCF, of an IP Multimedia Subsystem, IMS, comprising: in response to a restart, clearing user-related data in the knowledge that secondary S-CSCFs have been assigned respectively to the users concerned.

10. A method for use by a Home Subscriber Server, HSS, of an IP Multimedia Subsystem, IMS, comprising: receiving from an Interrogating Call/Session Control Function, I-CSCF, of the IMS a request for information relating to a Serving Call/Session Control Function, S-CSCF, of the IMS assigned to provide services to a user, and in response sending information relating to a primary and a secondary S-CSCF.

11. A method as claimed in claim 10, wherein the request is a re-registration or deregistration request.

12. A method for use by a Home Subscriber Server, HSS, of an IP Multimedia Subsystem, IMS, comprising: receiving a message from a Serving Call/Session Control Function, S-CSCF, of the IMS including information relating to a primary and a secondary Serving Call/Session Control Function, S-CSCF, of the IMS, and in response storing the information relating to the primary and the secondary S-CSCF.

13. A method for use in an IP Multimedia Subsystem, IMS, comprising associating at least a primary and a secondary Serving Call/Session Control Function, S-CSCF, of the IMS with a user, with responsibility for providing services to the user residing at least initially with the primary S-CSSF, thereby enabling the responsibility to be switched from the primary S-CSCF to the secondary S-CSCF should the primary S-CSCF become unavailable.

14. A method as claimed in claim 13, wherein associating comprises making use of such an association.

15. An apparatus for use in an IP Multimedia Subsystem, the apparatus comprising means for performing a method as claimed in any preceding claim.

16. A program, which when executed in an apparatus, controls the apparatus to perform a method as claimed in any one of claims 1 to 14, the program carried on a carrier medium, the carrier medium being a storage medium or a transmission medium.

17. A storage medium containing a program as claimed in claim 16.

## Patentansprüche

1. Verfahren zur Verwendung durch eine Interrogating Call/Session Control-Funktion, I-CSCF, eines IP-Multimedia-Subsystems, IMS, umfassend:
als Antwort auf Empfang einer SIP(Session Initiation-Protokoll)-Nachricht das Anfordern von Fähigkeitsinformation, die einen Benutzer von einem Home Subscriber Server, HSS, des IMS betrifft; und
nach Empfang der Fähigkeitsinformation vom HSS Auswählen einer primären und einer sekundären Serving Call/Session Control-Funktion, S-CSCF, des IMS, um dem Benutzer Dienste bereitzustellen.

2. Verfahren nach Anspruch 1, den Versuch umfassend, die SIP-Nachricht mit die sekundäre S-CSCF betreffender Information an die primäre S-CSCF weiterzuleiten, sodass die Information anschließend dem HSS bereitgestellt werden kann, und optional umfassend: falls der Versuch als Misserfolg bestimmt wird, die SIP-Nachricht stattdessen an die sekundäre S-CSCF weiterzuleiten.

3. Verfahren nach Anspruch 1 oder 2, worin die SIP-Nachricht einen nichtregistrierten Benutzer betrifft und/oder eine SIP-Register-Nachricht umfasst.

4. Verfahren zur Verwendung durch eine Interrogating Call/Session Control-Funktion, I-CSCF, eines IP-Multimedia-Subsystems, IMS, umfassend:
als Antwort auf Empfang einer SIP(Session Initiation-Protokoll)-Nachricht Information von einem Home Subscriber Server, HSS, des IMS anfordern, die eine Serving Call/Session Control-Funktion, S-CSCF, des IMS betrifft, der zugewiesen ist, einem Benutzer Dienste bereitzustellen; und
Empfangen von Information vom HSS, eine primäre und eine sekundäre S-CSCF betreffend, die einem Benutzer zugewiesen ist.

5. Verfahren nach Anspruch 4, den Versuch umfassend, die SIP-Nachricht an die primäre S-CSCF weiterzuleiten; und, falls der Versuch als Misserfolg bestimmt wird, falls beispielsweise von der primären S-CSCF innerhalb einer vorbestimmten Zeitperiode keine Antwort empfangen wird, die SIP-Nachricht stattdessen an die sekundäre S-CSCF weiterzuleiten.

6. Verfahren nach Anspruch 4 oder 5, worin die SIP-Nachricht einen registrierten Benutzer betrifft und/oder einer SIP-Register-Nachricht oder eine SIP-Invite-Nachricht umfasst.

7. Verfahren zur Verwendung durch eine Serving Call/Session Control-Funktion, S-CSCF, eines IP-Multimedia-Subsystems, IMS, umfassend: als Antwort auf Empfang einer SIP(Session Initiation-Protokoll)-Nachricht von einer Interrogating Call/Session Control-Funktion, I-CSCF, des IMS, die eine primäre und eine sekundäre Serving Call/Session Control-Funktion, S-CSCF, des IMS betreffende Information umfasst, Weiterleiten der die sekundäre Serving Call/Session Control-Funktion, S-CSCF, betreffenden Information an einen Home Subscriber Server, HSS, des IMS.

8. Verfahren nach Anspruch 7, umfassend, dass die Information an den HSS in einer Diameter-Nachricht wie beispielsweise einer Server Assignment-Anforderungsnachricht weitergeleitet wird.

9. Verfahren zur Verwendung durch eine Serving Call/Session Control-Funktion, S-CSCF, eines IP-Multimedia-Subsystems, IMS, umfassend: als Antwort auf einen Restart Löschen von benutzerbezogenen Daten bei Kenntnis der Tatsache, dass sekundäre S-CSCFs den betreffenden Benutzern jeweilig zugewiesen wurden.

10. Verfahren zur Verwendung durch einen Home Subscriber Server, HSS, eines IP-Multimedia- Subsystems, IMS, umfassend: von einer Interrogating Call/Session Control-Funktion, I-CSCF, des IMS eine Anforderung von Information empfangen, die eine Serving Call/Session Control-Funktion, S-CSCF, des IMS betrifft, der zugewiesen ist, einem Benutzer Dienste bereitzustellen, und als Antwort Information senden, die eine primäre und eine sekundäre S-CSCF betrifft.

11. Verfahren nach Anspruch 10, worin die Anforderung eine Wiederregistrierungs- oder Entregistrierungsanforderung ist.

12. Verfahren zur Verwendung durch einen Home Subscriber Server, HSS, eines IP-Multimedia- Subsystems, IMS, umfassend: Empfangen einer Nachricht von einer Serving Call/Session Control-Funktion, S-CSCF, des IMS, die eine primäre und eine sekundäre Serving Call/Session Control-Funktion, S-CSCF, des IMS betreffende Information enthält und als Antwort Speichern der die primäre und die sekundäre S-CSCF betreffenden Information.

13. Verfahren zur Verwendung in einem IP-Multimedia-Subsystem, IMS, das Assoziieren von mindestens einer primären und einer sekundären Serving Call/Session Control-Funktion, S-CSCF, des IMS mit einem Benutzer umfassend, wobei Verantwortung für das Bereitstellen von Diensten an den Benutzer mindestens anfänglich bei der primären S-CSCF liegt, wodurch ermöglicht wird, die Verantwortung von der primären S-CSCF auf die sekundäre S-CSCF zu übertragen, falls die primäre S-CSCF unverfügbar wird.

14. Verfahren nach Anspruch 13, worin das Assoziieren umfasst, von solch einer Assoziation Gebrauch zu machen.

15. Vorrichtung zur Verwendung in einem IP-Multimedia-Subsystem, wobei die Vorrichtung ein Mittel umfasst, um ein Verfahren nach einem vorhergehenden Anspruch auszuführen.

16. Programm, das bei Ausführung in einer Vorrichtung die Vorrichtung steuert, ein Verfahren nach einem der Ansprüche 1 bis 14 auszuführen, wobei das Programm auf einem Trägermedium getragen wird und das Trägermedium ein Speichermedium oder eine Übertragungsmedium ist.

17. Speichermedium, das ein Programm nach Anspruch 16 enthält.

## Revendications

1. Procédé destiné à être utilisé par une fonction de commande de session/d'appel d'interrogation, I-CSCF, d'un sous-système multimédia IP, IMS, comprenant les étapes ci-dessous consistant à :
en réponse à la réception d'un message de protocole d'ouverture de session, SIP, demander des informations de capacités connexes à un utilisateur, à partir d'un serveur d'abonnés résidentiels, HSS, du sous-système IMS ; et
suite à la réception des informations de capacités en provenance du serveur HSS, sélectionner des fonctions de commande de session/d'appel de service, S-CSCF, principale et secondaire, du sous-système IMS en vue de fournir des services à l'utilisateur.

2. Procédé selon la revendication 1, comprenant l'étape consistant à tenter d'acheminer le message de protocole SIP à la fonction S-CSCF principale avec des informations connexes à la fonction S-CSCF secondaire, de sorte que les informations peuvent être fournies subséquemment au serveur HSS, et comprenant éventuellement, s'il est déterminé que la tentative a échoué, l'étape consistant à acheminer à la place le message de protocole SIP à la fonction S-CSCF secondaire.

3. Procédé selon la revendication 1 ou 2, dans lequel le message de protocole SIP concerne un utilisateur non enregistré et/ou comporte un message d'enregistrement de protocole SIP.

4. Procédé destiné à être utilisé par une fonction de commande de session/d'appel d'interrogation, I-CSCF, d'un sous-système multimédia IP, IMS, comprenant les étapes ci-dessous consistant à :
en réponse à la réception d'un message de protocole d'ouverture de session, SIP, demander des informations, à partir d'un serveur d'abonnés résidentiels, HSS, du sous-système IMS, connexes à une fonction de commande de session/d'appel de service, S-CSCF, du sous-système IMS affecté, en vue de fournir des services à un utilisateur ; et
recevoir des informations, en provenance du serveur HSS, connexes à des fonctions S-CSCF principale et secondaire affectées à l'utilisateur.

5. Procédé selon la revendication 4, comprenant l'étape consistant à tenter d'acheminer le message de protocole SIP à la fonction S-CSCF principale, et s'il est déterminé que la tentative a échoué, par exemple, si une réponse n'est pas reçue à partir de la fonction S-CSCF principale dans un délai prédéterminé, acheminer à la place le message de protocole SIP à la fonction S-CSCF secondaire.

6. Procédé selon la revendication 4 ou 5, dans lequel le message de protocole SIP concerne un utilisateur enregistré et/ou comporte un message d'enregistrement de protocole SIP ou un message d'invitation de protocole SIP.

7. Procédé destiné à être utilisé par une fonction de commande de session/d'appel de service, S-CSCF, d'un sous-système multimédia IP, IMS, comprenant les étapes ci-après consistant à : en réponse à la réception d'un message de protocole d'ouverture de session, SIP, en provenance d'une fonction de commande de session/d'appel d'interrogation, I-CSCF, du sous-système IMS, comprenant des informations connexes à des fonctions de commande de session/d'appel de service, S-CSCF, principale et secondaire du sous-système IMS, acheminer les informations connexes à la fonction de commande de session/d'appel de service secondaire à un serveur d'abonnés résidentiels, HSS, du sous-système IMS.

8. Procédé selon la revendication 7, comprenant l'étape consistant à acheminer les informations au serveur HSS dans un message de demande de type « Diamètre », tel qu'un message de demande d'affectation de serveur.

9. Procédé destiné à être utilisé par une fonction de commande de session/d'appel de service, S-CSCF, d'un sous-système multimédia IP, IMS, comprenant l'étape ci-après consistant à : en réponse à un redémarrage, effacer des données connexes à l'utilisateur, sachant que les fonctions S-CSCF secondaires ont été affectées respectivement aux utilisateurs concernés.

10. Procédé destiné à être utilisé par un serveur d'abonnés résidentiels, HSS, d'un sous-système multimédia IP, IMS, comprenant les étapes ci-après consistant à : recevoir, d'une fonction de commande de session/d'appel d'interrogation, I-CSCF, du sous-système IMS, une demande d'informations connexes à une fonction de commande de session/d'appel de service, S-CSCF, du sous-système IMS affecté, en vue de fournir des services à un utilisateur, et en réponse, envoyer les informations connexes à des fonctions S-CSCF principale et secondaire.

11. Procédé selon la revendication 10, dans lequel la demande est une demande de réenregistrement ou d'annulation d'enregistrement.

12. Procédé destiné à être utilisé par un serveur d'abonnés résidentiels, HSS, d'un sous-système multimédia IP, IMS, comprenant les étapes ci-après consistant à : recevoir un message en provenance d'une fonction de commande de session/d'appel de service, S-CSCF, du sous-système IMS, comportant des informations connexes à des fonctions de commande de session/d'appel de service, S-CSCF, principale et secondaire du sous-système IMS, et en réponse, stocker les informations connexes aux fonctions S-CSCF principale et secondaire.

13. Procédé destiné à être utilisé dans un sous-système multimédia IP, IMS, comprenant l'étape consistant à associer au moins des fonctions de commande de session/d'appel de service, S-CSCF, principale et secondaire d'un sous-système IMS à un utilisateur, ces fonctions ayant vocation à fournir des services à l'utilisateur résident au moins initialement au niveau de la fonction S-CSCF principale, ce qui déclenche par conséquent la possibilité d'une commutation de la fonction S-CSCF principale à la fonction S-CSCF secondaire, dans le cas où la fonction S-CSCF principale devient indisponible.

14. Procédé selon la revendication 13, dans lequel l'étape d'association comprend l'étape consistant à faire usage d'une telle association.

15. Dispositif destiné à être utilisé dans un sous-système multimédia IP, le dispositif comportant un moyen permettant de mettre en oeuvre un procédé selon l'une quelconque des revendications précédentes.

16. Programme informatique lequel, lorsqu'il est exécuté dans un dispositif, amène le dispositif à mettre en oeuvre un procédé selon l'une quelconque des revendications 1 à 14, le programme informatique étant pris en charge sur un support, le support étant un support de stockage ou un support de transmission.

17. Support de stockage contenant un programme informatique selon la revendication 16.
